(19) Europäisches Patentamt / European Patent Office / Office européen des brevets

(11) **EP 4 030 661 B1**

(12) **EUROPEAN PATENT SPECIFICATION**

(45) Date of publication and mention
of the grant of the patent:
**04.06.2025 Bulletin 2025/23**

(21) Application number: **19944833.3**

(22) Date of filing: **12.09.2019**

(51) International Patent Classification (IPC):
*H04W 72/12* (2023.01)   *H04W 84/08* (2009.01)

(52) Cooperative Patent Classification (CPC):
**H04W 72/1268; H04W 84/08**

(86) International application number:
**PCT/CN2019/105712**

(87) International publication number:
**WO 2021/046806 (18.03.2021 Gazette 2021/11)**

(54) **DATA TRANSMISSION METHOD, SYSTEM, AND DEVICE, TERMINAL, AND STORAGE DEVICE**

DATENÜBERTRAGUNGSVERFAHREN, SYSTEM UND VORRICHTUNG, ENDGERÄT UND SPEICHERVORRICHTUNG

PROCÉDÉ, SYSTÈME ET DISPOSITIF DE TRANSMISSION DE DONNÉES, TERMINAL, ET DISPOSITIF DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.07.2022 Bulletin 2022/29**

(73) Proprietor: **Hytera Communications Corporation Limited**
**Guangdong 518057 (CN)**

(72) Inventors:
• **WEI, Xiumei**
  **Shenzhen, Guangdong 518057 (CN)**
• **LUO, Zhenghua**
  **Shenzhen, Guangdong 518057 (CN)**
• **LIU, Xing**
  **Shenzhen, Guangdong 518057 (CN)**
• **ZHANG, Yingzhe**
  **Shenzhen, Guangdong 518057 (CN)**
• **ZHANG, Jingjing**
  **Shenzhen, Guangdong 518057 (CN)**

(74) Representative: **Grünecker Patent- und Rechtsanwälte**
**PartG mbB**
**Leopoldstraße 4**
**80802 München (DE)**

(56) References cited:
CN-A- 106 304 100    CN-A- 106 922 032
US-A1- 2016 227 425   US-A1- 2019 037 590
US-A1- 2019 149 364

**Description**

## TECHNICAL FIELD

The present application relates to the field of communications, and in particu ir, relates to a data transmission method and a system and apparatus thereof, a terminal, and a storage apparatus.

## BACKGROUND

In a conventional interphone system, a terminal generally initiates a service in an asynchronous mode. Terminals spontaneously preempt a channel by monitoring usage conditions of the channel. This is unreliable, and is extremely easy to cause air interface conflict during a transmission process, thereby affecting the success rate of services.

When a service load on the channel is relatively small, the terminals can alternately use the channel by using a random back-off mode. However, when the service load on the channel is relatively large, this mode cannot satisfy requirements.

Along with the development of technology, users more and more expect to obtain various information of terminals in real time, and in cooperation with a third-party dispatching platform, high-efficiency management and dispatching work is implemented in the system. In order to satisfy the requirements, the terminals need to report data of the terminals to a dispatching station periodically. When a large amount of terminals exist in the system, the service initiating mode above cannot satisfy frequent updating and uploading of user information.

In conclusion, at present, how to avoid air interface conflict in data uploading of terminals is an essential topic at present

US 2019/149364 A1 describes resource patterns for uplink transmissions. A method includes receiving, from a base station, a scheduling parameter associated with a transmission opportunity period; determining, based at least in part on the scheduling parameter, a plurality of resource offsets for the UE, where each resource offset of the plurality of resource offsets includes a timing offset; and performing an uplink transmission using a set of transmission resources associated with the plurality resource of offsets.

US 2019/037590 A1 discloses a data pull-up system for dynamically allocating an uplink channel that comprises a communication device and a communication terminal. The communication device sends a pull-up signaling to at least one communication terminal, the pull-up signaling comprising an uplink channel, a time slot, and a pull-up policy allocated by the communication device. The at least one communication terminal uploads data to the communication device using the uplink channel on the time slot according to the pull-up policy. The data comprises feature information of a subsequent pull-up, and the feature information is used for the communication device to adjust at least one of the subsequent pull-up time and the subsequent pull-up policy. The uplink channel may be any idle channel in the current system.

It is the object of the present invention to provide a data transmission method and system and apparatus thereof, a base station, a terminal, and a storage apparatus, for avoiding channel air interface conflict.

This object is solved by the subject matter of the independent claims.

Embodiments are defined by the dependent claims.

The technical problem mainly solved by the present application is to provide a data transmission method and a system and apparatus thereof, a terminal and a storage apparatus, for avoiding channel air interface conflict.

The beneficial effects of the present application are that: according to the solution above, a base station issues timing parameters, and a terminal determines data upload time by taking the timing parameters as a reference and uploads data; because timing parameters are uniformly allocated by the base station, each terminal can obtain upload time not conflicting with that of other terminals, and thus the problem of channel air interface conflict is avoided.

## BRIEF DESCRIPTION OF THE DRAWINGS

FIG. 1 is a schematic structural diagram of one embodiment of a data transmission system of the present application;

FIG. 2 is a schematic flowchart of one embodiment of a data transmission method of the present application;

FIG. 3 is a common announcement channel issuing rule in one embodiment;

FIG. 4 is a framework flowchart of determining data upload time of a terminal on the basis of timing parameters in one embodiment;

FIG. 5 is a structural diagram of a set of short link control frames under DMR standards in one embodiment;

FIG. 6 is a structural diagram of a timing frame in a short link control frame under DMR standards in one embodiment;

FIG. 7 is a timing parameter calibration chart of a terminal at a current working channel in one embodiment;

FIG. 8 is a timing parameter calibration chart of a terminal at a data channel in one embodiment;

FIG. 9 is a schematic flowchart of another embodiment of a data transmission method of the present application;

FIG. 10 is a block diagram of a data transmission apparatus in one embodiment;

FIG. 11 is a block diagram of a data transmission apparatus;

FIG. 12 is a schematic structural diagram of one embodiment of a data transmission device of the present application;

FIG. 13 is a schematic structural diagram of a storage apparatus in one embodiment of the present application;

FIG. 14 is an architecture diagram of an Extended Pseudo Trunk (XPT) system;

FIG. 15 is a common announcement channel-based issuing rule;

FIG. 16 is a terminal calibration process diagram;

FIG. 17 is a conventional transfer diagram.

## SPECIFIC EMBODIMENTS

In the following description, for purposes of explanation and not limitation, specific details are set forth, such as a particular system structure, an interface and techniques in order to provide a thorough understanding of the present application. The term "system" and "network" may be used interchangeably herein. The term "and/or" in this specification describes only an association relationship for describing associated objects and represents that three relationships may exist. For example, A and/or B may represent the following three cases: Only A exists, both A and B exist, and only B exists. In addition, the character "/" in this description usually indicates an "or" relationship between the associated objects.

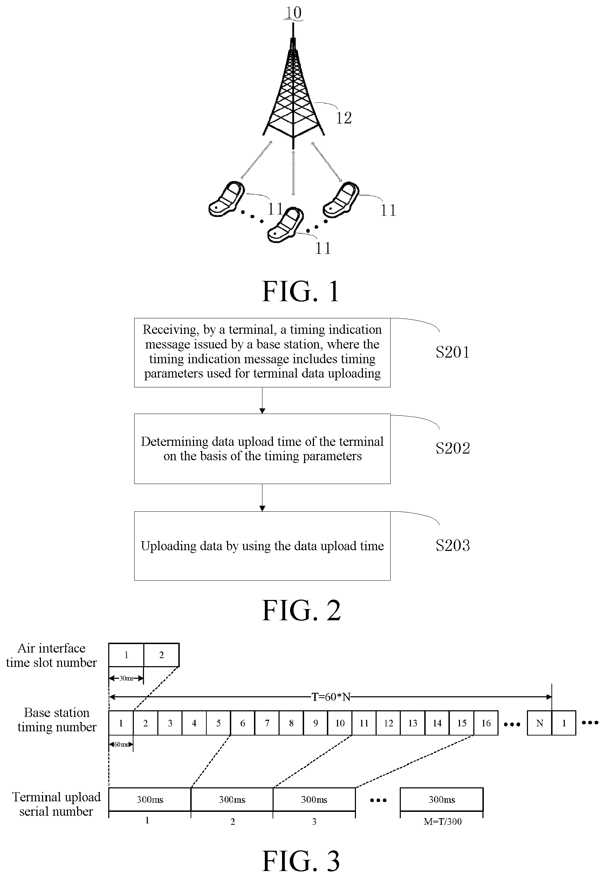

In view of FIG. 1, FIG. 1 is a schematic structural diagram of one embodiment of a data transmission system of the present application. In this embodiment, the system 10 may be applied to a trunking wideband communication system, and is specifically a trunking wideband private communication system or a trunking wideband public communication system, including multiple terminals 11 and multiple base stations 12.

The terminals 11 may be any communicable mobile terminals, for example, interphones, mobile phones, and other handheld communication terminals, and notebook computers.

The terminals 11 are specifically interphones, for example, wideband/narrowband digital interphones based on technologies such as Digital Mobile Radio (DMR), Professional Digital Trunking (PDT), Trans European Trunked Radio (TETRA), and Long Term Evolution (LTE).

In the system 10, the base station 12 may also be a transfer station or a relay station, and at least one channel is established between the plurality of terminals 11 and the base station 12 for communications. Mutual communications are implemented by forwarding by the base station 12 between the terminals 11 in the system 10. The base station 12 is specifically configured to execute the following method embodiment executed by a base station, and the terminals 11 are specifically configured to execute the following method embodiment executed by a terminal.

Embodiments concerning a data transmission method and related devices are further provided.

In view of FIG. 2, FIG. 2 is a schematic flowchart of one embodiment of a data transmission method of the present application. In this embodiment, the method is executed by a terminal and specifically includes the following steps:

At step S201, a terminal receives a timing indication message issued by a base station, where the timing indication message includes timing parameters used for terminal data uploading.

The timing parameters are data distributed for upload time of the terminal, and each terminal determines data upload time of the terminal according to the received timing parameter. The timing parameters may directly provide the data upload time of the terminal, or the data upload time of the terminal may be obtained by direct correction and calculation on the basis of the timing parameters. As long as upload time is reasonably distributed on the basis that base station timing does not overlap in a base station timing dimension, the both modes can allow the terminal to upload data on the basis of the data upload time without generating air interface conflict.

The timing indication message not only carries the timing parameter, but also carries other data facilitating communication establishment and/or implementation between the base station and the terminal, and is designed according to needs. Specifically, with regard to the base station issuing the timing indication message, reference may be made to related descriptions in the following embodiment of a data transmission method executed by a base station.

In some embodiments, the timing indication message in step S201 may be issued by the base station using a Control Signaling Block (CSBK) or a Common Announcement Channel (CACH). Moreover, the timing parameters include a serial number of the timing indication message in an upload cycle, the upload cycle, and a step value, where the step value is duration of data uploading of each terminal.

For example, the serial number in the upload cycle is cyclically counted up in turn in the upload cycle, and the cycle count starts from 1 again after reaching the upload cycle T. For example, as shown in FIG. 3, the upload cycle of the terminal is configured as T(s) in the drawing, and the upload cycle is consistent with a timing cycle of the base station. The base station issues that the serial number in the upload cycle is N {N=T(s)/60(ms)}, and the serial number cyclically issued may be a value from 1 to N. The time for the terminal to upload data once, i.e., the step value STEP (MS), is configured to be 300 ms, and the maximum quantity of terminals capable of conducting uploading in the upload cycle T is M, where M=T/STEP, and M is an integer. Hence, the quantity of the terminals communicating with the base station is adjustable, and the upload time of the terminals are also adjusted according to the quantity of the terminals. Thus, expansion is flexibly carried out.

In some embodiments, in step S201, the timing parameters further include a channel utilization rate, where the channel utilization rate represents a proportion of total duration of the data upload time of all terminals in the upload cycle in total duration of the upload cycle. Moreover, in the upload cycle, the remaining time other than the data upload time may also be reserved for the terminal for carrying out a single pulling-up or retransmission.

In this embodiment, the timing parameters provide the serial number in the upload cycle, the upload cycle, the step value and the channel utilization rate that determine the upload time, and then the terminal performs calibration and calculation to obtain the upload time of the terminal, so that the upload time is more accurate, and cases of getting wrong upload time or missing upload time due to a system fault are avoided.

At step S202, data upload time of the terminal is determined on the basis of the timing parameters.

It is understood that for a time parameter determined on the basis of the base station timing dimension, on the premise that no conflict happens in base station timing dimension, the determined data upload time can complete data uploading, and the problem of air interface conflict is not caused between terminals during data uploading.

At step S203, data is uploaded by using the data upload time.

It is understood that throughout the method, taking the timing parameters obtained from the timing indication message issued by the base station as a reference, the terminal obtains the data upload time based on the timing parameter. Moreover, the data upload time of each terminal is different, and does not conflict with each other. In this way, when each terminal performs data uploading, a phenomenon of preempting a channel will not happen, and the problem of air interface conflict is also avoided.

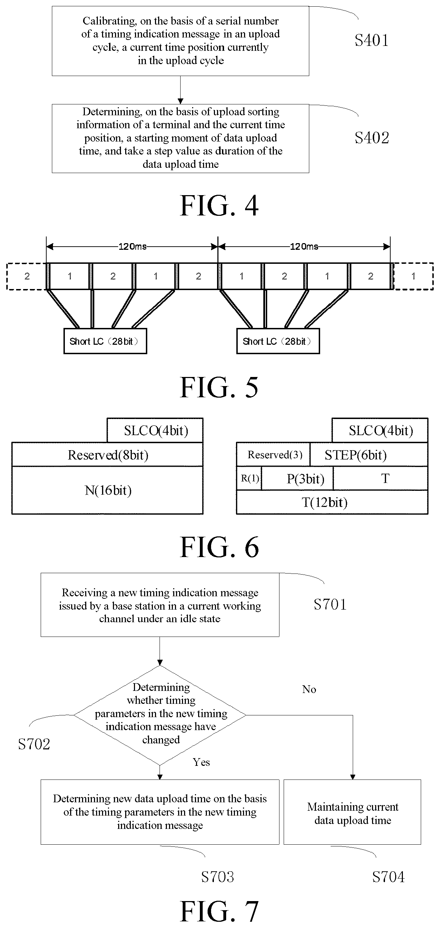

In view of FIG. 4, FIG. 4 is a schematic flowchart of part of one embodiment of a data transmission method of the present application. The method is executed by a terminal, and specific steps of step S202 are as follows:

At step S401, on the basis of the serial number of the timing indication message in the upload cycle, a current time position currently in the upload cycle is calibrated.

For example, in the method, the timing indication message corresponds to a plurality of timing frames of the upload cycle; the serial number of the timing indication message in the upload cycle includes a first serial number of one timing frame corresponding to the timing indication message.

Therefore, in step S401, a process for determining a current position is be: obtaining a second serial number of the last corresponding timing frame in the timing indication message by using the first serial number and the number of timing frames between the timing frame having the first serial number and the last corresponding timing frame in the timing indication message, and take a product of the second serial number and time corresponding to a unit timing frame as the current time position currently in the upload cycle.

For example, when the timing indication message is issued by the base station using the CACH, the timing indication message includes two Short Link Control (Short LC) frames, each Short LC frame corresponds to two timing frames, the first Short LC frame includes the first serial number, the first serial number is a serial number of the latter timing frame of the two timing frames corresponding to the first Short LC frame in the upload cycle, and the second Short LC frame includes remaining information other than the serial number in the timing indication message.

For example, as shown in FIG. 5, DMR standards stipulate that every four CACHs data units form one 28-bit Short LC frame. Therefore, it can be known that one valid Short LC frame is obtained every 120 ms. Because only 28-bit valid data of a Short LC frame can be used, and 4 bits are required to be used for Short Link Control Opcodes (SLCOs), only 24 bits in one Short LC frame are actually used for indicating a current serial number of the base station. Therefore, as shown in FIG. 6, one complete timing frame, configured to facilitate calibration of the terminal, to be issued by means of the Short LC frames is divided into two packets and then issued. 16-Bit data of the first Short LC frame is configured to indicate the serial number in the upload cycle, i.e., the first serial number. The second Short LC frame is used for issuing report parameters such as the upload cycle T, the step value STEP and the channel utilization rate P that are currently configured.

The serial number N in the upload cycle issued to the base station by means of the Short LC frame contains 16 bits in total. The maximum number of N is 65,535, so that the upload cycle T=0.06*N=3932(s)≈65(min). As shown in FIG. 6, T occupies 12 bits in the timing frame. Specific numerical ranges of parameters are as shown in Table I.

Table I Table of numerical ranges of upload parameters

| Name | Symbol | Numerical range | Step | Description |
|---|---|---|---|---|
| Serial number in upload cycle | N | 1-65,535 | 1 | Base stations sequentially issues base station timing incrementally, for calibration of terminals. |
| Upload cycle | T | 1-3,932 (s) (an integral multiple of 60 ms) | 1 s | An upload cycle configured by a system. |
| Step value | STEP | 60-1,860 (ms) | 60 ms | Time used by terminals for uploading data. |
| Channel utilization rate | P | 50%, 67%, 75%, 80%, 90%, 100% | - | A proportion of time slices used by terminals for uploading data in all time slices. |
| Terminal serial number | M | 1-65,535 | 1 | Serial numbers of terminals for uploading data, where every terminal serial number is unique. |

It can be seen from Table I that a settable cycle range for data uploading of terminals is large, and thus flexibility is achieved.

It is understood that in other embodiments where a timing indication message is not issued by using a CACH, the numerical ranges of the parameters and the step value may be different from those in Table I.

For example, a specific method for obtaining a second serial number of the last corresponding timing frame in the timing indication message may be: obtaining that the number of timing frames between the latter timing frame corresponding to the first Short LC frame and the latter timing frame corresponding to the second Short LC frame is 2, and adding the first serial number and the number of timing frames to obtain the second serial number.

At step S402, on the basis of upload sorting information of the terminal and the current time position, a starting moment of the data upload time is determined, and the step value is taken as duration of the data upload time.

For example, a theoretical time position of the terminal is determined on the basis of the upload sorting information of the terminal, and a time difference between the theoretical time position of the terminal and the current time position is obtained, where the time difference is remaining time until the starting moment of the data upload time.

Specifically, the terminal determines an actual upload serial number by using the channel utilization rate and the theoretical upload serial number. When the actual upload serial number is specifically determined, the following determinations need to be made:

when P=1, $M_0=M$;

when P≠1 and $M < \dfrac{1}{1-P}$, $M_0=M$; and

when P≠1 and $M \geq \dfrac{1}{1-P}$, $M_0 = \dfrac{M}{P}$;

where P is the channel utilization rate, M is the theoretical upload serial number; and $M_0$ is the actual upload serial number.

The theoretical time position of the terminal in the upload cycle is obtained by using the actual upload serial number and the step value. The upload sorting information is the theoretical upload serial number. For example, the theoretical time position of the terminal in the upload cycle is obtained by subtracting 1 from the actual upload serial number and multiplying by the step value. If the current time position is equal to or greater than the theoretical time position, a difference between the upload cycle and the current time position is added to the theoretical time position to obtain a first time difference. Or, if the current time position is less than the theoretical time position, a difference between the theoretical time position and the current time position is taken as a second time difference.

It is understood that according to the current time position and the upload sorting information of the terminal in the upload cycle, a time difference between the positions can easily be determined, and thus a timer starts timing. A starting point of the upload time is determined according to a timer timeout, and then data upload taking a duration of the step value is carried out at the starting point of the upload time. Theoretically, feasibility of avoiding air interface conflict during data uploading is ensured.

In this embodiment, the data transmission method of the present application continues step S203 after step S402 is executed. Specific steps of step S203 are: starting timing after the remaining time is determined; and uploading data within the duration of the step value when the timing reaches the remaining time.

In some embodiments, the timing indication message between the base station and the terminal is transmitted by using a current working channel (e.g., a CACH) or a data channel. For example, in an idle state, the base station issues the timing indication message by using a control signaling block in a downlink of an air interface of a data channel, and in a non-dormant state, the base station issues the timing indication message by means of Short LC information in a CACH. Obviously, the base station may also issue the timing indication message only in the air interface of the data channel, or issue the timing indication message only in the CACH, which is not limited herein.

In one embodiment of the data transmission method of the present application, the method is executed by the terminal above. The terminal can directly receive the timing indication message by means of the current working channel. For example, when executing step S201, the terminal receives the timing indication message issued by the base station in the current working channel, where the working channel is the CACH. Obviously, the working channel may also be other non-data channels. In step S203, when the data upload time is reached, the terminal switches from the working channel to a data channel, and uploads data by using the data channel.

In one embodiment of the data transmission method of the present application, the method is executed by a terminal. Because the quantity of terminals connected to the base station in the system may change, and thus the timing parameters other than the serial numbers may be adjusted by the base station according to data of current terminals, while waiting for data uploading, the data upload time of the terminals may also be adjusted. By adjusting the data upload time, the upload time of the terminal in the system is updated in time, so that channel resource waste caused by vacant channel communication time occupied by a terminal due to the inability to obtain a communication situation that the terminal is disconnected from a base station is avoided, and a communication fault problem caused by the inability to obtain channel communication time or conflict of the obtained channel communication time with that of other terminals when a terminal is newly connected to a system to communication with a base station.

In this embodiment, refer to FIG. 7 for adjustment of the upload time. FIG. 7 is a schematic flowchart of one embodiment of a data transmission method of the present application. This embodiment is executed by a terminal. After step S202 as shown in FIG. 2 is executed, the following steps are further executed:

At step S701, a new timing indication message issued by a base station is received in a current working channel under an idle state.

The new timing indication message has a consistent format as that of the timing indication message above. Details are not further described herein.

At Step 702, whether timing parameters in the new timing indication message have changed is determined, and if yes, step S703 is executed, otherwise, step S704 is executed.

For example, timing parameters other than a serial number in the new timing indication message are compared with the corresponding timing parameters in the last received timing indication message to determine whether a change has happened.

At step S703, new data upload time is determined on the basis of the timing parameters in the new timing indication message.

Please refer to the description content above for the mode for determining the data upload time on the basis of the timing parameters in the new timing indication message. Details are not further described herein.

At step S704, the current data upload time is maintained.

Because the steps are all executed in the current working channel, correspondingly, step S203 specifically includes the following:

when the new data upload time or the maintained data upload time is reached, switching from the working channel to a data channel, and uploading data by using the data channel.

In some embodiments, the terminal can directly receive the timing indication message by means of the data channel. for example, when executing step S201, the terminal switches from the current working channel to the data channel, and receives the timing indication message issued by the base station in the data channel. After the timing indication message is received, the terminal switches from the data channel to the working channel. The working channel is the CACH. Obviously, the working channel may also be other non-data channels. **In** step S203, when the data upload time is reached, the terminal switches from the working channel to a data channel, and uploads data by using the data channel.

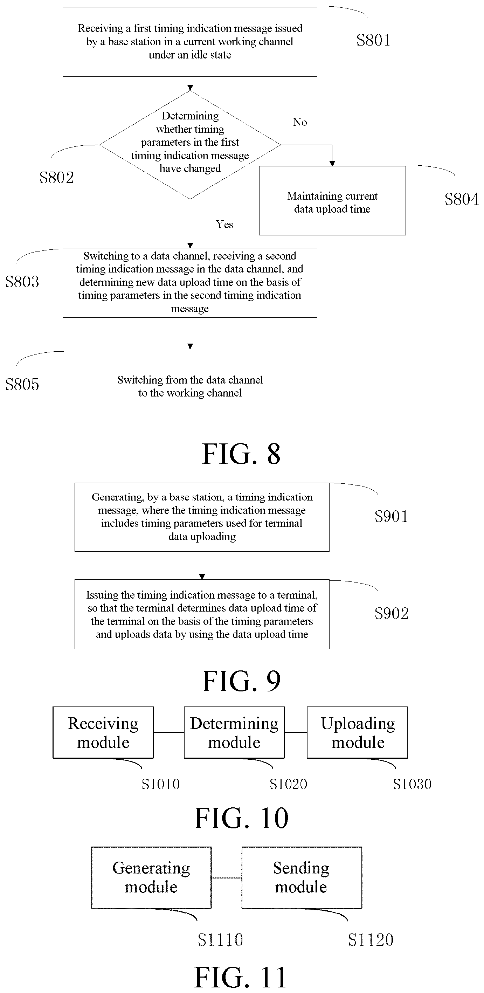

In addition, while waiting for data uploading, the upload time of the terminal can still be adjusted. For example, because working channels used by different terminals in the system may be different, time between the working channels of the different terminals may also be out of sync, and thus the issuing timing on the working channels are also out of sync. However, the timing on data channels are synchronous. Therefore, the timing parameters other than the serial number in the upload cycle are received in the current working channel. If the parameters have changed, then the data channel is switched to, the serial number in the upload cycle is received, and on the basis of the serial number and the parameters received in the working channel, the new upload time is determined. Specifically, in view of FIG. 8, FIG. 8 is a schematic flowchart of one embodiment of a data transmission method of the present application. This embodiment is executed by the terminal. After step S202 is executed, the following adjustment steps are further executed:

At step S801, a first timing indication message issued by a base station is received in a current working channel under an idle state.

At step S802, whether timing parameters in the first timing indication message have changed is determined, and if yes, step S803 is executed, otherwise, step S804 is executed.

For example, timing parameters other than a serial number in the first timing indication message are compared with the corresponding timing parameters in the last received timing indication message to determine whether a change has happened.

At step S803, a data channel is switched to, a second timing indication message is received in the data channel, and new data upload time is determined on the basis of timing parameters in the second timing indication message. Then step S805 is executed.

The first timing indication message includes remaining information other than the serial number in the timing indication message, and the second timing indication message includes serial number information in the timing indication message. Hence, whether the timing parameters have changed are determined by using the current working channel, and if yes, the serial number in the upload cycle is received by using the data channel, so as to adjust the upload time. Obviously, in other embodiments, the first and second timing indication messages also have consistent formats as that of the timing indication message above. That is, the first timing indication message further includes the serial number in the upload cycle, and the second timing indication message further includes the timing parameters other than the serial number, which is not limited herein. In addition, the first timing indication message may also consist of Short LC frames, and the second timing indication message may also be a control signaling block.

At step S804, the current data upload time is maintained.

At step S805, switching is performed from the data channel to the working channel.

After the data upload time is adjusted, the terminal continues to return to the working channel for communications. Correspondingly, step S203 specifically includes: when the new data upload time or the maintained data upload time is reached, switching from the working channel to the data channel, and uploading data by using the data channel.

It is understood that adjusting the data upload time by using the data channel may not be combined with the current working channel. For example, after step S202, the method further includes: switching, by the terminal, to the data channel at regular time, receiving a new timing indication message issued by the base station in the data channel, determining whether timing parameters in the new timing indication message have changed, if yes, determining new data upload time on the basis of the timing parameters in the new timing indication message, and if not, maintaining the current data upload time; after the data upload time is determined again, switching from the data channel to the working channel. Step S203 above specifically includes:
when the new data upload time or the maintained data upload time is reached, switching from the working channel to a data channel, and uploading data by using the data channel.

In view of FIG. 9, FIG. 9 is a schematic flowchart of another embodiment of a data transmission method of the present application. In this embodiment, the method is executed by a base station and specifically includes the following steps:
At step S901, a base station generates a timing indication message, where the timing indication message includes timing parameters used for terminal data uploading.

In this embodiment, reference may be made to related descriptions in the embodiments above for the timing indication message. For example, the timing parameters include a serial number of the timing indication message in an upload cycle, the upload cycle, and a step value, where the step value is duration of data uploading of each terminal.

The timing indication message generated by the base station may be the timing indication message formed by the base station determining, according to a situation of a terminal currently connected to the base station, the upload cycle and/or the step value representing the duration of data uploading of each terminal, and encapsulating the step value, the serial number of the timing indication message in the upload cycle, and the upload cycle. For example, in a case that the upload cycle is fixed, if the quantity of terminals currently connected to the base station is large, the step value is decreased. If the quantity of terminals currently connected to the base station is small, the step value is increased. Therefore, each connected terminal is ensured to possess its own data upload time. For example, in a case that the upload cycle is variable, to ensure that each terminal has certain data upload time, the upload cycle is increased when the quantity of terminals currently connected to the base station is large, and the upload cycle is decreased when the quantity of terminals currently connected to the base station is small. Therefore, the base station dynamically adjusts the timing parameters other than the serial number in the upload cycle according to the situation of the terminal currently connected to the base station, so that it is ensured that the terminal can adjust the upload time thereof in real time to avoid air interface conflict.

At step S902, the timing indication message is issued to a terminal, so that the terminal determines data upload time of the terminal on the basis of the timing parameters and uploads data by using the data upload time.

The issuing the timing indication message to a terminal may be: issuing the timing indication message by using a control signaling block or a CACH, where when the timing indication message is issued by using the CACH, the timing indication message includes two Short LC frames, each Short LC frame corresponds to two timing frames, the first Short LC frame includes a serial number of the latter timing frame of the two timing frames corresponding to the first Short LC frame in the upload cycle, and the second Short LC frame includes remaining information other than the serial number in the timing indication message. In one embodiment, in an idle state, the base station issues the timing indication message by using a control signaling block in a downlink of an air interface of a data channel, and in a non-dormant state, the base station issues the timing indication message by means of Short LC information in a CACH.

Reference may be made to related descriptions in the embodiments of the data transmission method executed by the terminal above for the process of the terminal determining the data upload time according to the timing parameters and uploading data by using the data upload time. Details are not further described herein.

It is understood that the base station, on the basis of the timing of the base station, generates the timing indication message including the timing parameters. The timing indication message is uniformly distributed by the base station, so that each terminal obtains one data upload time not conflicting with that of other terminals, so that the problem of air interface conflict is avoided.

For the base station issuing the timing indication message to the terminal, the step of a terminal performing data transmission as shown in FIG. 2 is described in detail. Details are not further described herein.

In view of FIG. 10, FIG. 10 is a schematic structural diagram of one embodiment of a data transmission apparatus of the present application. In this embodiment, the data transmission apparatus is applied to the terminal, and includes a receiving module 1010, a determining module 1020, and an uploading module 1030.

The receiving module 1010 is configured to receive, by a terminal, a timing indication message issued by a base station, where the timing indication message includes timing parameters used for terminal data uploading.

The determining module 1020 is configured to determine data upload time of the terminal on the basis of the timing parameters.

The uploading module 1030 is configured to upload data by using the data upload time.

In some embodiments, the timing parameters include a serial number of the timing indication message in an upload cycle, the upload cycle, and a step value, where the step value is duration of data uploading of each terminal.

The determining module 1020 includes:

a calibrating unit, configured to calibrate, on the basis of the serial number of the timing indication message in the upload cycle, a current time position currently in the upload cycle; and

a determining unit, configured to determine, on the basis of upload sorting information of the terminal and the current time position, a starting moment of the data upload time, and take the step value as duration of the data upload time.

In some embodiments, the determining unit is configured to determine a theoretical time position of the terminal on the basis of the upload sorting information of the terminal, and obtain a time difference between the theoretical time position of the terminal and the current time position, where the time difference is remaining time until the starting moment of the data upload time.

The uploading module 1030 includes:

a timing unit, configured to start timing; and

an uploading unit, configured to upload data within the duration of the step value when the timing reaches the remaining time.

In some embodiments, the timing parameters further include a channel utilization rate, where the channel utilization rate represents a proportion of total duration of the data upload time of all terminals in the upload cycle in total duration of the upload cycle; and the upload sorting information is a theoretical upload serial number.

The determining unit is configured to determine an actual upload serial number by using the channel utilization rate and the theoretical upload serial number and obtain the theoretical time position of the terminal in the upload cycle by using the actual upload serial number and the step value.

In some embodiments, when the determining unit is used to determine an actual upload serial number by using the channel utilization rate and the theoretical upload serial number, the following determination should be made:

when $P=1$, $M_0=M$;

when $P\neq 1$ and $M < \dfrac{1}{1-P}$, $M_0=M$; and

when $P\neq 1$ and $M \geq \dfrac{1}{1-P}$, $M_0 = \dfrac{M}{P}$;

where P is the channel utilization rate, M is the theoretical upload serial number; and $M_0$ is the actual upload serial number.

In some embodiments, the determining unit is further specifically configured to obtain the theoretical time position of the terminal in the upload cycle by subtracting 1 from the actual upload serial number and multiplying by the step value.

The determining unit is further specifically configured to compare the current time position with the theoretical time position, if the current time position is equal to or greater than the theoretical time position, add a difference between the upload cycle and the current time position to the theoretical time position to obtain a first time difference, or if the current time position is less than the theoretical time position, take a difference between the theoretical time position and the current time position as a second time difference.

In some embodiments, the timing indication message corresponds to a plurality of timing frames of the upload cycle. The serial number of the timing indication message in the upload cycle includes a first serial number of one timing frame corresponding to the timing indication message.

The calibrating unit is specifically configured to obtain a second serial number of the last corresponding timing frame in the timing indication message by using the first serial number and the number of timing frames between the timing frame having the first serial number and the last corresponding timing frame in the timing indication message, and take a product of the second serial number and time corresponding to a unit timing frame as the current time position currently in the upload cycle.

In some embodiments, the timing indication message is issued by the base station using a control signaling block or a CACH.

When the timing indication message is issued by the base station using the CACH, the timing indication message includes two Short LC frames, each Short LC frame corresponds to two timing frames, the first Short LC frame includes the first serial number, the first serial number is a serial number of the latter timing frame of the two timing frames corresponding to the first Short LC frame in the upload cycle, and the second Short LC frame includes remaining information other than the serial number in the timing indication message; and the calibrating unit is further specifically configured to obtain that the number of timing frames between the latter timing frame corresponding to the first Short LC frame and the latter timing frame corresponding to the second Short LC frame is 2, and add the first serial number and the number of timing frames to obtain the second serial number.

In some embodiments, the receiving module 1010 is configured to receive the timing indication message issued by the base station in a current working channel, where the working channel is the CACH.

After the determining module 1020 determines the data upload time of the terminal, the receiving module 1010 is configured to receive a new timing indication message issued by the base station in the current working channel under an idle state.

The determining module 1020 is configured to determine whether timing parameters in the new timing indication message have changed.

If yes, new data upload time is determined on the basis of the timing parameters in the new timing indication message.

If not, the current data upload time is maintained.

The uploading module 1030 is configured to, when the new data upload time or the maintained data upload time is reached, switch from the working channel to a data channel, and upload data by using the data channel.

In some embodiments, the receiving module 1010 is configured to switch from a current working channel to a data channel, and receive the timing indication message issued by the base station in the data channel, where the working channel is the CACH.

The receiving module 1010 switches from the data channel to the working channel.

After the determining module 1020 determines the data upload time of the terminal, the receiving module 1010 receives a first timing indication message issued by the base station in the current working channel under an idle state, the determining module 1020 determines whether timing parameters in the first timing indication message have changed, if yes, the receiving module 1010 switches to the data channel and receives a second timing indication message in the data channel, and the receiving module 1010 determines new data upload time on the basis of the timing parameters in the second timing indication message, and if not, the receiving module 1010 maintains current data upload time; or the receiving module 1010 switches to the data channel at regular time, and receives a new timing indication message issued by the base station in the data channel, and the determining module 1020 determines whether timing parameters in the new timing indication message have changed, if yes, determines new data upload time on the basis of the timing parameters in the new timing indication message, and if not, maintains the current data upload time.

The receiving module 1010 switches from the data channel to the working channel; and

The uploading module 1030 is configured to, when the new data upload time or the maintained data upload time is reached, switch from the working channel to a data channel, and upload data by using the data channel.

In view of FIG. 11, FIG. 11 is a schematic structural diagram of one embodiment of a data transmission apparatus of the present application. In this embodiment, the data transmission apparatus is applied to the base station, and includes a generating module 1110 and a sending module 1120.

The generating module 1110 is configured to generate, by a base station, a timing indication message, where the timing indication message includes timing parameters used for terminal data uploading.

The sending module 1120 is configured to issue the timing indication message to a terminal, so that the terminal determines data upload time of the terminal on the basis of the timing parameters and uploads data by using the data upload time.

In some embodiments, the timing parameters include a serial number of the timing indication message in an upload cycle, the upload cycle, and a step value, where the step value is duration of data uploading of each terminal.

The generating module 1110 is configured to determine, by the base station according to a situation of a terminal currently connected to the base station, the upload cycle and/or the step value representing the duration of data uploading of each terminal, and encapsulate the step value, the serial number of the timing indication message in the upload cycle, and the upload cycle to form the timing indication message.

The sending module 1120 is configured to issue the timing indication message by using a control signaling block or a CACH, where when the timing indication message is issued by using the CACH, the timing indication message includes two Short LC frames, each Short LC frame corresponds to two timing frames, the first Short LC frame includes a serial number of the latter timing frame of the two timing frames corresponding to the first Short LC frame in the upload cycle, and the second Short LC frame includes remaining information other than the serial number in the timing indication message.

The modules of the data transmission apparatus are configured to execute corresponding steps in the method embodiments above. Details are not further described herein. Moreover, the modules may specifically be program modules.

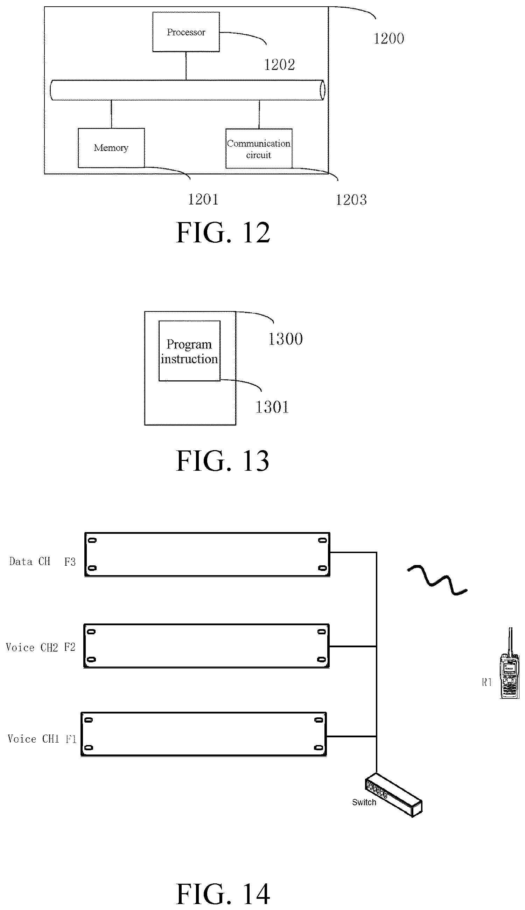

In view of FIG. 12, FIG. 12 is a schematic structural diagram of one embodiment of a data transmission system 1200 of the present application. In this embodiment, the data transmission device 1200 may be the terminal 11 or base station 12 in the system shown in FIG. 1. The data transmission device 1200 includes a memory 1201, a processor 1202, and a communication circuit 1203. Components of the data transmission device 1200 are combined together by means of a bus, or the processor of the data transmission device 1200 is separately connected to other components one by one.

When the data transmission device 1200 is the terminal, the communication circuit 1203 is configured to communicate with other devices, such as a base station. When the data transmission device 1200 is a base station, the communication circuit 1203 is configured to communicate with other devices such as other base stations, a core network device and a terminal. Specifically, the communication circuit 1203 includes a sender and a receiver.

The memory 1201 is configured to store computer instructions executed by the processor 1202 and data of the processor 1202 in a processing process, where the memory 1201 includes a non-volatile storage part, configured to store the computer instructions. In another embodiment, the memory 1201 may merely serve as a memory of the processor 1202 and caches computer instructions executed by the processor 1202. The computer instructions are actually stored in a device other than the terminal. The processor 1202 is connected to the external device and invokes the computer instructions stored externally to execute corresponding processing.

The processor 1202 is configured to execute computer instructions stored by the memory 1201 to implement the method provided in any one of the embodiments above. Specifically, the processor 1202 controls operations of the data transmission device 1200. The processor 1202 may also be called as a Central Processing Unit (CPU). The processor 1202 is an integrated circuit chip, and has a signal processing capability. The processor 1202 may also be a general-purpose processor, a digital signal processor (DSP), an Application-Specific Integrated Circuit (ASIC), a Field Programmable Gate Array (FPGA) or other programmable logic devices, discrete gate or transistor logic, or discrete hardware components. The general-purpose processor may be a microprocessor or a processor, or may also be any conventional processor.

In view of FIG. 13, the present application further provides a schematic structural diagram of an embodiment of a storage apparatus. In this embodiment, the storage apparatus 1300 stores program instructions 1301 executable by a processor. The program instructions 1301 are configured to execute the method in the embodiments above.

The storage apparatus 1300 may be a medium for storing the computer instructions 1301, such as a USB drive, a removable hard disk, a Read-Only Memory (ROM), a Random Access Memory (RAM), a magnetic disk, and an optical disc, or may be a server storing the computer instructions 1301. The server sends the stored computer instructions 1301 to other devices to be executed, or the server also executes the stored computer instructions 1301.

In one embodiment, the storage apparatus 1300 may also be a memory 81 as shown in FIG. 12.

For the present application, an example is illustrated in combination with a specific application scene.

As in an Extended Pseudo Trunk (XPT) monostatic system shown in FIG. 14, the system includes a transfer station and multiple terminals connected to the transfer station. The quantity of channels between the terminals and the transfer station is three in total. F1 and F2 are voice channels, i.e., working channels, and F3 is a data channel. The data channel Data Ch is configured to upload cycle data. An upload cycle T configured by the system is 30 s, a step value STEP is 300 ms, and a channel utilization rate P is 100%. An upload serial number M of a terminal R1 set by write frequency is 2.

Hence, it can be obtained that the maximum value of the serial number N in the upload cycle issued by the data channel Data Ch by means of an air interface is 500.

After the terminal is powered on, the base station counts up according to the serial number in the upload cycle of the base station, starts counting from 1 to 500 and then starts counting from 1 again. Moreover, in an idle state, the transfer station issues timing parameters by using a control signaling block in a downlink of an air interface of a data channel, and in a non-dormant state, the transfer station issues the timing parameters by means of Short LC information in a working channel.

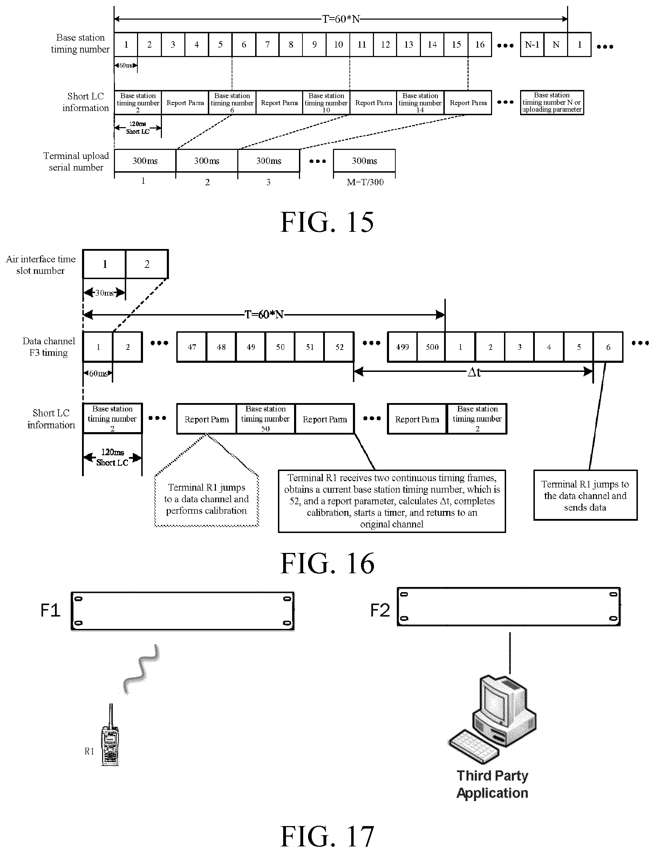

In the terminal calibration process shown in FIG. 14, the calibration is carried out by issuing timing parameters on a CACH, and the CACH issuing rule is as shown in FIG. 15.

After the terminal R1 is powered on, the terminal stays in a voice channel Master channel F1 or F2 by default to monitor a service in the voice channel. When the terminal needs to upload data of a cycle service, the terminal needs to jump to a data channel F3 to obtain timing parameters of the data channel, thereby performing calibration. As can be seen from FIG. 14, after the terminal R1 jumps to the data channel F3, the terminal R1 receives a timing frame having a serial number of 50 in an upload cycle from Short LCs of a downlink CACH of an air interface of the data channel, meanwhile, obtains, from a subsequent timing frame, the upload cycle T and a step value STEP, and performs calculation to obtain a current system timing frame serial number N1=50+2=52. Hence, the remaining time until next data uploading is calculated: $\Delta t=(T-N1*60)+(M_0-1)*STEP=27180$ ms (where $M_0$ is a serial number of an actual upload time slice of the terminal R1; and therefore, a current channel utilization rate is 100%, and $M_0=M$ herein). The terminal R1 obtains $\Delta t$, completes calibration, starts a cycle timer T0 for periodically uploading data, and returns to the original voice channel to continue monitoring the service of the voice channel. When the timer T0 times out, a cycle timer having a cycle of T is started. Meanwhile, the terminal jumps to the data channel F3 immediately to upload data of the cycle service of the terminal.

In this embodiment, the channel utilization rate P set by the system is 100%. Therefore, the serial number $M_0$ actually uploaded by the terminal R1 is equal to the terminal write-frequency configuration serial number M. However, if the channel utilization rate is another value, the channel utilization rate P should be considered for the value of $M_0$.

After the channel utilization rate P is added, the calculating formulas for $M_0$ are as follows:

when P=1, $M_0=M$;

when P≠1 and $M < \dfrac{1}{1-P}$ , $M_0=M$; and

when P≠1 and $M \geq \dfrac{1}{1-P}$, $M_0 = \dfrac{M}{P}$ .

Therefore, calculating formulas for the remaining time $\Delta t$ until next data uploading when the terminal performs calibration are obtained.

The calculating formulas for $\Delta t$ are as follows:

When $N1*60 < (M_0-1)*STEP$,

$\Delta t = (M_0-1)*STEP-N1*60$(ms); and

when $N1*60 \geq (M_0-1)*STEP$.

$\Delta t = T-N1*60+(M_0-1)*STEP$(ms).

T represents an upload cycle set by a base station, and N1 represents a serial number, received by a terminal, in a system upload cycle issued by the base station.

The example above illustrates a configuration method for an XPT monostatic system.

Because in an XPT system, voice channels are composed of a plurality of transfer stations, and terminals under the system are dynamically distributed in the voice channels for monitoring services, when the transfer stations under the system needs to report the services in an upload cycle, calibration of timing can only be completed uniformly over a data channel. However, in a conventional transfer system, voice channels only have one transfer station, and all terminals implement services under the transfer station, the terminals under the system can complete calibration of timing by using the transfer station of the voice channels. After the calibration is completed, the terminals jump to a data channel to upload data. In this way, the trouble of jumping to a data channel for calibration is saved.

As shown in FIG. 17, a conventional transfer system sets F1 for issuing timing calibration information. At this time, a transfer station F1 needs to broadcast a serial number in an upload cycle and other cycle report parameters by means of a CACH. A terminal R1 sets a conventional transfer working channel as F1, and a jump channel for uploading cycle data services as F2.

After the terminal is powered on, the terminal stays in F1, receives Short LCs issued by the transfer station in the CACH, obtains a current timing number N1, an upload cycle T, a step value STEP and a channel utilization rate of the transfer station, calculates $\Delta t$ according to the CACH issuing rule in combination with the system in FIG. 15, starts a cycle timer T0 immediately, and completes calibration. When the timer T0 times out, the terminal jumps to the data channel F2 immediately and sends data reported periodically.

The present application provides a more reasonably and comprehensive solution for uploading data. A base station issues timing parameters, and a terminal determines data upload time by taking the timing parameters as a reference and uploads data, so that each terminal can obtain upload time not conflicting with that of other terminals, and thus the problem of channel air interface conflict is avoided.

In the several embodiments provided in the present application, it is to be understood that, the disclosed method and apparatus may be implemented in another manner. For example, the apparatus implementations described above are merely exemplary. For example, the division of the modules or units is merely the division of logic functions, and other division manners may be used during actual implementation. For example, a plurality of units or components may be combined, or may be integrated into another system, or some features may be omitted or not performed. In addition, the coupling, or direct coupling, or communication connection between the displayed or discussed components may be the indirect coupling or communication connection by means of some interfaces, apparatuses, or units, and may be electrical, mechanical or of other forms.

The units described as separate components may or may not be physically separated, and the components displayed as units may or may not be physical units, and may be located in one place or may be distributed over a plurality of network units. Some or all of the units may be selected based on actual needs to achieve the objectives of the solutions of this implementation.

In addition, functional units in the embodiments of the present application may be integrated into one processing unit, or each of the units may be physically separated, or two or more units may be integrated into one unit. The integrated unit may be implemented in the form of hardware, or may be implemented in a form of a software functional unit.

When the integrated unit is implemented in a form of a software functional unit and sold or used as an independent product, the integrated unit may be stored in one computer-readable storage medium. Based on such an understanding, the technical solutions of the present application essentially, or a part contributing to the related art, or all or a part of the technical solution may be implemented in a form of a software product. The computer software product is stored in a storage medium and includes several instructions for instructing one computer device (which may be a PC, a server, a network device or the like) or a processor to perform all or some of steps of the methods in the implementations. The above-mentioned storage medium includes: a USB drive, a removable hard disk, a Read-Only Memory (ROM), a Random Access Memory (RAM), a magnetic disk, or an optical disk and other media that can store program codes.

**Claims**

1. A data transmission method, comprising:

   receiving (S201), by a terminal, a timing indication message issued by a base station, wherein the timing indication message comprises timing parameters used for terminal data uploading;
   determining (S202) data upload time of the terminal on the basis of the timing parameters; and
   uploading (S203) data by using the data upload time,
   wherein the timing parameters comprise a serial number of the timing indication message in an upload cycle, the upload cycle, and a step value, wherein the step value is duration of data uploading of each terminal; and
   the determining data upload time of the terminal on the basis of the timing parameters comprises:

      calibrating (S401), on the basis of the serial number of the timing indication message in the upload cycle, a current time position currently in the upload cycle; and
      determining (S402), on the basis of upload sorting information of the terminal and the current time position, a starting moment of the data upload time, and taking the step value as duration of the data upload time, and wherein the determining, on the basis of upload sorting information of the terminal and the current time position, a starting moment of the data upload time comprises:

         determining a theoretical time position of the terminal on the basis of the upload sorting information of the terminal; and
         obtaining a time difference between the theoretical time position of the terminal and the current time position, wherein the time difference is remaining time until the starting moment of the data upload time; and
         the uploading data by using the data upload time comprises:

            start timing; and
            uploading data within the duration of the step value when the timing reaches the remaining time.

2. The method according to claim 1,

   wherein the timing parameters further comprise a channel utilization rate, wherein the channel utilization rate represents a proportion of total duration of the data upload time of all terminals in the upload cycle in total duration of the upload cycle; the upload sorting information is a theoretical upload serial number; and
   the determining a theoretical time position of the terminal on the basis of the upload sorting information of the terminal comprises:

      determining an actual upload serial number by using the channel utilization rate and the theoretical upload serial number; and
      obtaining the theoretical time position of the terminal in the upload cycle by using the actual upload serial number and the step value.

3. The method according to claim 2, wherein the determining an actual upload serial number by using the channel utilization rate and the theoretical upload serial number comprises:

   when P=1, MO=M;
   when P≠1 and , MO=M; and
   when P≠1 and,
   wherein P is the channel utilization rate, M is the theoretical upload serial number; and M0 is the actual upload serial number;
   the obtaining the theoretical time position of the terminal in the upload cycle by using the actual upload serial number and the step value comprises:

      obtaining the theoretical time position of the terminal in the upload cycle by subtracting 1 from the actual upload serial number and multiplying by the step value; and
      the obtaining a time difference between the theoretical time position of the terminal and the current time position, comprises:

if the current time position is equal to or greater than the theoretical time position, adding a difference between the upload cycle and the current time position to the theoretical time position to obtain a first time difference; or

if the current time position is less than the theoretical time position, taking a difference between the theoretical time position and the current time position as a second time difference.

4. The method according to claim 1, wherein the timing indication message corresponds to a plurality of timing frames of the upload cycle; the serial number of the timing indication message in the upload cycle comprises a first serial number of one timing frame corresponding to the timing indication message; and

the calibrating, on the basis of the serial number of the timing indication message in the upload cycle, a current time position currently in the upload cycle comprises:

obtaining a second serial number of the last corresponding timing frame in the timing indication message by using the first serial number and the number of timing frames between the timing frame having the first serial number and the last corresponding timing frame in the timing indication message; and

taking a product of the second serial number and time corresponding to a unit timing frame as the current time position currently in the upload cycle.

5. The method according to claim 4, wherein the timing indication message is issued by the base station using a control signaling block or a common announcement channel;

when the timing indication message is issued by the base station using the common announcement channel, the timing indication message comprises two short link control frames, each short link control frame corresponds to two timing frames, the first short link control frame comprises the first serial number, the first serial number is a serial number of the latter timing frame of the two timing frames corresponding to the first short link control frame in the upload cycle, and the second short link control frame comprises remaining information other than the serial number in the timing indication message; and

the obtaining a second serial number of the last corresponding timing frame in the timing indication message by using the first serial number and the number of timing frames between the timing frame having the first serial number and the last corresponding timing frame in the timing indication message comprises:

obtaining that the number of timing frames between the latter timing frame corresponding to the first short link control frame and the latter timing frame corresponding to the second short link control frame is 2; and

adding the first serial number and the number of timing frames to obtain the second serial number.

6. A terminal (11), comprising a processor (1202), and a communication circuit (1203) and a memory (1201) connected to the processor, wherein the processor is configured to execute program instructions stored by the memory, so as to implement, in combination with the communication circuit, the method according to one of claims 1 to 5.

7. A data transmission system (10), comprising a base station (12) and a plurality of terminals (11), wherein at least one channel is established between the base station and the terminals to perform communications; and

the terminal is the terminal according to claim 6.

8. The data transmission system according to claim 7, wherein the base station comprises a processor (1202), and a communication circuit (1203) and a memory (1201) connected to the processor, wherein the processor is configured to execute program instructions stored by the memory, so as to implement, in combination with the communication circuit, the method of:

generating (S901) a timing indication message, wherein the timing indication message comprises timing parameters used for terminal data uploading; and

issuing (S902) the timing indication message to a terminal, so that the terminal determines data upload time of the terminal on the basis of the timing parameters and uploads data by using the data upload time.

9. The data transmission system according to claim 8, wherein the timing parameters comprise a serial number of the timing indication message in an upload cycle, the upload cycle, and a step value, wherein the step value is duration of data uploading of each terminal;

the generating, by a base station, a timing indication message comprises:

determining, by the base station according to a situation of a terminal currently connected to the base station, the upload cycle and/or the step value representing the duration of data uploading of each terminal, and encapsulating the step value, the serial number of the timing indication message in the upload cycle, and the upload cycle to form the timing indication message; and

the issuing the timing indication message to a terminal comprises:

issuing the timing indication message by using a control signaling block or a common announcement channel, wherein when the timing indication message is issued by using the common announcement channel, the timing indication message comprises two short link control frames, each short link control frame corresponds to two timing frames, the first short link control frame comprises a serial number of the latter timing frame of the two timing frames corresponding to the first short link control frame in the upload cycle, and the second short link control frame comprises remaining information other than the serial number in the timing indication message.

10. A storage apparatus (1300), storing program instructions (1301) executable by a processor, wherein the program instructions are configured to implement the method according to any one of claims 1 to 5.

11. A data transmission apparatus, comprising:

a receiving module (1010), configured to receive, by a terminal, a timing indication message issued by a base station, wherein the timing indication message comprises timing parameters used for terminal data uploading;

a determining module (1020), configured to determine data upload time of the terminal on the basis of the timing parameters; and

an uploading module (1030), configured to upload data by using the data upload time,

wherein the timing parameters comprise a serial number of the timing indication message in an upload cycle, the upload cycle, and a step value, wherein the step value is duration of data uploading of each terminal;

the determining module (1020) comprises:

a calibrating unit, configured to calibrate, on the basis of the serial number of the timing indication message in the upload cycle, a current time position currently in the upload cycle; and

a determining unit, configured to determine, on the basis of upload sorting information of the terminal and the current time position, a starting moment of the data upload time, and take the step value as duration of the data upload time, and

wherein the determining unit is configured to determine a theoretical time position of the terminal on the basis of the upload sorting information of the terminal, and obtain a time difference between the theoretical time position of the terminal and the current time position, wherein the time difference is remaining time until the starting moment of the data upload time; and

the uploading module (1030) comprises:

a timing unit, configured to start timing; and

an uploading unit, configured to upload data within the duration of the step value when the timing reaches the remaining time.

12. The apparatus according to claim 11,

wherein the timing parameters further comprise a channel utilization rate, wherein the channel utilization rate represents a proportion of total duration of the data upload time of all terminals in the upload cycle in total duration of the upload cycle; the upload sorting information is a theoretical upload serial number; and

the determining unit is configured to determine an actual upload serial number by using the channel utilization rate and the theoretical upload serial number and obtain the theoretical time position of the terminal in the upload cycle by using the actual upload serial number and the step value.

13. The apparatus according to claim 12, wherein when the determining unit is used to determine an actual upload serial number by using the channel utilization rate and the theoretical upload serial number, the following determination should be made:

when P=1, MO=M;

when P≠1 and , MO=M; and

when P≠1 and,

wherein P is the channel utilization rate, M is the theoretical upload serial number; and M0 is the actual upload serial number;

the determining unit is further configured to obtain the theoretical time position of the terminal in the upload cycle by subtracting 1 from the actual upload serial number and multiplying by the step value; and

the determining unit is further configured to make the following determination:

if the current time position is equal to or greater than the theoretical time position, adding a difference between the upload cycle and the current time position to the theoretical time position to obtain a first time difference; or if the current time position is less than the theoretical time position, taking a difference between the theoretical time position and the current time position as a second time difference.

14. The apparatus according to claim 11, wherein the timing indication message corresponds to a plurality of timing frames of the upload cycle; the serial number of the timing indication message in the upload cycle comprises a first serial number of one timing frame corresponding to the timing indication message; and

the calibrating unit is further configured to obtain a second serial number of the last corresponding timing frame in the timing indication message by using the first serial number and the number of timing frames between the timing frame having the first serial number and the last corresponding timing frame in the timing indication message, and take a product of the second serial number and time corresponding to a unit timing frame as the current time position currently in the upload cycle.

15. The apparatus according to claim 14, wherein the timing indication message is issued by the base station using a control signaling block or a common announcement channel;

when the timing indication message is issued by the base station using the common announcement channel, the timing indication message comprises two short link control frames, each short link control frame corresponds to two timing frames, the first short link control frame comprises the first serial number, the first serial number is a serial number of the latter timing frame of the two timing frames corresponding to the first short link control frame in the upload cycle, and the second short link control frame comprises remaining information other than the serial number in the timing indication message; and the calibrating unit is further configured to obtain that the number of timing frames between the latter timing frame corresponding to the first short link control frame and the latter timing frame corresponding to the second short link control frame is 2, and add the first serial number and the number of timing frames to obtain the second serial number.

### Patentansprüche

1. Datenübertragungsverfahren, das umfasst:

Empfangen (S201) einer von einer Basisstation ausgegebenen Zeitbestimmungs-Anzeigenachricht durch ein Endgerät, wobei die Zeitbestimmungs-Anzeigenachricht Zeitbestimmungs-Parameter umfasst, die zum Hochladen von Daten des Endgerätes genutzt werden;

Bestimmen (S202) von Zeit zum Hochladen von Daten des Endgerätes auf Basis der Zeitbestimmungs-Parameter; sowie

Hochladen (S203) von Daten unter Verwendung der Zeit zum Hochladen von Daten,

wobei die Zeitbestimmungs-Parameter eine Seriennummer der Zeitbestimmungs-Anzeigenachricht in einem Hochlade-Zyklus, den Hochlade-Zyklus sowie einen Schritt-Wert umfassen, wobei der Schritt-Wert Dauer des Hochladens von Daten jedes Endgerätes ist; und

Bestimmen von Zeit zum Hochladen von Daten des Endgerätes auf Basis der Zeitbestimmungs-Parameter umfasst:

Kalibrieren (S401) einer aktuellen Zeitposition, die aktuell in dem Hochlade-Zyklus vorliegt, auf Basis der Seriennummer der Zeitbestimmungs-Anzeigenachricht in dem Hochlade-Zyklus; sowie Bestimmen (S402) eines Anfangsmomentes der Zeit zum Hochladen von Daten auf Basis von Hochlade-Sortierinformationen des Endgerätes sowie der aktuellen Zeitposition und Einsetzen des Schritt-Wertes als Dauer der Zeit zum Hochladen von Daten, und

wobei das Bestimmen eines Anfangsmomentes der Zeit zum Hochladen von Daten auf Basis von Hochlade-Sortierinformationen des Endgerätes sowie der aktuellen Zeitposition umfasst:

Bestimmen einer theoretischen Zeitposition des Endgerätes auf Basis der Hochlade-Sortierinformationen des Endgerätes; sowie

Ermitteln einer Zeitdifferenz zwischen der theoretischen Zeitposition des Endgerätes und der aktuellen Zeit Position, wobei die Zeitdifferenz bis zu dem Anfangsmoment der Zeit zum Hochladen von Daten verbleibende Zeit ist; und

wobei das Hochladen von Daten unter Verwendung der Zeit zum Hochladen von Daten umfasst:

Anfangs-Zeitbestimmung; sowie
Hochladen von Daten innerhalb der Dauer des Schritt-Wertes, wenn die Zeitbestimmung die verbleibende Zeit erreicht.

2. Verfahren nach Anspruch 1,

wobei die Zeitbestimmungs-Parameter des Weiteren eine Kanalnutzungs-Rate umfassen, die Kanalnutzungs-Rate einen Anteil von Gesamtdauer der Zeit zum Hochladen von Daten aller Endgeräte in dem Hochlade-Zyklus an Gesamtdauer des Hochlade-Zyklus repräsentiert; die Hochlade-Sortierinformationen eine theoretische Hochlade-Seriennumer sind; und
das Bestimmen einer theoretischen Zeitposition des Endgerätes auf Basis der Hochlade-Sortierinformationen des Endgerätes umfasst:

Bestimmen einer tatsächlichen Hochlade-Seriennumer unter Verwendung der Kanalnutzungs-Rate und der theoretischen Hochlade-Seriennumer; sowie
Ermitteln der theoretischen Zeitposition des Endgerätes in dem Hochlade-Zyklus unter Verwendung der tatsächlichen Hochlade-Seriennumer sowie des Schritt-Wertes.

3. Verfahren nach Anspruch 2, bei dem das Bestimmen einer tatsächlichen Hochlade-Seriennumer unter Verwendung der Kanalnutzungs-Rate sowie der theoretischen Hochlade-Seriennumer umfasst:

wenn P=1, MO=M;
wenn P≠1 und, MO=M; und
wenn P≠1 und,
wobei P die Kanalnutzungs-Rate ist, M die theoretische Hochlade-Seriennumer ist und M0 die tatsächliche Hochlade-Seriennumer ist;
das Ermitteln der theoretischen Zeitposition des Endgerätes in dem Hochlade-Zyklus unter Verwendung der tatsächlichen Hochlade-Seriennumer sowie des Schritt-Wertes umfasst:

Ermitteln der theoretischen Zeitposition des Endgerätes in dem Hochlade-Zyklus durch Subtrahieren von 1 von der tatsächlichen Hochlade-Seriennumer sowie Multiplizieren mit dem Schritt-Wert; und
das Ermitteln einer Zeitdifferenz zwischen der theoretischen Zeitposition des Endgerätes und der aktuellen Zeit Position umfasst:

Addieren einer Differenz zwischen dem Hochlade-Zyklus und der aktuellen Zeitposition zu der theoretischen Zeitposition, um eine erste Zeitdifferenz zu ermitteln, wenn die aktuelle Zeitposition der theoretischen Zeitposition gleich ist oder sie überschreitet; oder
Bilden einer Differenz zwischen der theoretischen Zeitposition und der aktuellen Zeitposition als eine zweite Zeitdifferenz, wenn die aktuelle Zeitposition die theoretische Zeitposition unterschreitet.

4. Verfahren nach Anspruch 1, wobei die Zeitbestimmungs-Anzeigenachricht einer Vielzahl von Zeitbestimmungs-Rahmen des Hochlade-Zyklus entspricht; die Seriennummer der Zeitbestimmungs-Anzeigenachricht in dem Hochlade-Zyklus eine erste Seriennummer eines der Zeitbestimmungs-Anzeigenachricht entsprechenden Zeitbestimmungs-Rahmens umfasst; und
das Kalibrieren einer aktuellen Zeitposition, die aktuell in dem Hochlade-Zyklus vorliegt, auf Basis der Seriennummer der Zeitbestimmungs-Anzeigenachricht in dem Hochlade-Zyklus umfasst:

Ermitteln einer zweiten Seriennummer des letzten entsprechenden Zeitbestimmungs-Rahmens in der Zeitbestimmungs-Anzeigenachricht unter Verwendung der ersten Seriennummer und der Anzahl von Zeitbestimmungs-Rahmen zwischen dem Zeitbestimmungs-Rahmen mit der ersten Seriennummer und dem letzten entsprechenden Zeitbestimmungs-Rahmen in der Zeitbestimmungs-Anzeigenachricht; sowie
Bilden eines Produkts der zweiten Seriennummer und Zeit, die einem einzelnen Zeitbestimmungs-Rahmen entspricht, als die aktuelle Zeitposition, die aktuell in dem Hochlade-Zyklus vorliegt.

**EP 4 030 661 B1**

5. Verfahren nach Anspruch 4, wobei die Zeitbestimmungs-Anzeigenachricht von der Basisstation unter Verwendung eines Steuerungs-Signalisierungsblocks oder eines gemeinsamen Ankündigungs-Kanals ausgegeben wird;

wenn die Zeitbestimmungs-Anzeigenachricht von der Basisstation unter Verwendung des gemeinsamen Ankündigungs-Kanals ausgegeben wird, die Zeitbestimmungs-Anzeigenachricht zwei Short-LC-Rahmen (short link control frames) umfasst, jeder Short-LC-Rahmen zwei Zeitbestimmung-Rahmen entspricht, der erste Short-LC-Rahmen die erste Seriennummer umfasst, die erste Seriennummer eine Seriennummer des späteren Zeitbestimmungs-Rahmens der zwei dem ersten Short-LC-Rahmen entsprechenden Zeitbestimmungs-Parameter in dem Hochlade-Zyklus ist und der zweite Short-LC-Rahmen verbleibende Informationen neben der Seriennummer in der Zeitbestimmungs-Anzeigenachricht umfasst; und
das Ermitteln einer zweiten Seriennummer des letzten entsprechenden Zeitbestimmungs-Rahmens in der Zeitbestimmungs-Anzeigenachricht unter Verwendung der ersten Seriennummer sowie der Anzahl von Zeitbestimmungs-Rahmen zwischen dem Zeitbestimmungs-Rahmen mit der ersten Seriennummer und dem letzten entsprechenden Zeitbestimmungs-Rahmen in der Zeitbestimmungs-Anzeigenachricht umfasst:

Ermitteln, dass die Anzahl von Zeitbestimmungs-Rahmen zwischen dem dem ersten Short-LC-Rahmen entsprechenden späteren Zeitbestimmungs-Rahmen und dem dem zweiten Short-LC-Rahmen entsprechenden späteren Zeitbestimmungs-Rahmen 2 beträgt; sowie
Addieren der ersten Seriennummer und der Anzahl von Zeitbestimmungs-Parameter zum Ermitteln der zweiten Seriennummer.

6. Endgerät (11), das einen Prozessor (1202) sowie eine Kommunikationsschaltung (1203) und einen Speicher (1201) umfasst, die mit dem Prozessor verbunden sind, wobei der Prozessor so konfiguriert ist, dass er von dem Speicher gespeicherte Programmanweisungen ausführt, um zusammen mit der Kommunikationsschaltung das Verfahren nach einem der Ansprüche 1 bis 5 zu implementieren.

7. Datenübertragungssystem (10), das eine Basisstation (12) sowie eine Vielzahl von Endgeräten (11) umfasst, wobei wenigstens ein Kanal zwischen der Basisstation und den Endgeräten zum Durchführen von Übertragungsvorgängen eingerichtet wird; und
das Endgerät das Endgerät nach Anspruch 6 ist.

8. Datenübertragungssystem nach Anspruch 7, wobei die Basisstation einen Prozessor (1202) sowie eine Kommunikationsschaltung (1203) und einen Speicher (1201) umfasst, die mit dem Prozessor verbunden sind, wobei der Prozessor so konfiguriert ist, dass er von dem Speicher gespeicherte Programmanweisungen ausführt, um zusammen mit der Kommunikationsschaltung das Verfahren zu implementieren zum:

Erzeugen (S901) einer Zeitbestimmungs-Anzeigenachricht, wobei die Zeitbestimmungs-Anzeigenachricht Zeitbestimmungs-Parameter umfasst, die zum Hochladen von Daten eines Endgerätes genutzt werden; und
Ausgeben (S902) der Zeitbestimmungs-Anzeigenachricht an ein Endgerät so, dass das Endgerät Zeit zum Hochladen von Daten des Endgerätes auf Basis der Zeitbestimmungs-Parameter bestimmt und Daten unter Verwendung der Zeit zum Hochladen von Daten hochlädt.

9. Datenübertragungssystem nach Anspruch 8, wobei die Zeitbestimmungs-Parameter eine Seriennummer der Zeitbestimmungs-Anzeigenachricht in einem Hochlade-Zyklus, den Hochlade-Zyklus sowie einen Schritt-Wert umfassen, wobei der Schritt-Wert Dauer des Hochladens von Daten jedes Endgerätes ist;
das Erzeugen einer Zeitbestimmungs-Anzeigenachricht durch eine Basisstation umfasst:

Bestimmen des Hochlade-Zyklus und/oder des Schritt-Wertes, die die Dauer von Hochladen von Daten jedes Endgerätes repräsentieren, durch die Basisstation entsprechend einer Situation eines aktuell mit der Basisstation verbundenen Endgerätes,
sowie Einkapseln des Schritt-Wertes, der Seriennummer der Zeitbestimmungs-Anzeigenachricht in dem Hochlade-Zyklus sowie des Hochlade-Zyklus zum Ausbilden der Zeitbestimmungs-Anzeigenachricht; und
das Ausgeben der Zeitbestimmungs-Anzeigenachricht an ein Endgerät umfasst:
Ausgeben der Zeitbestimmungs-Anzeigenachricht unter Verwendung eines Steuerungs-Signalisierungsblocks oder eines gemeinsamen Ankündigungs-Kanals, wobei, wenn die Zeitbestimmungs-Anzeigenachricht unter Verwendung des gemeinsamen Ankündigungs-Kanals ausgegeben wird, die Zeitbestimmungs-Anzeigenachricht zwei Short-LC-Rahmen (short link control frames) umfasst, jeder Short-LC-Rahmen zwei Zeitbestimmungs-Parameter entspricht, der erste Short-LC-Rahmen eine Seriennummer des späteren Zeitbestimmungs-Rah-

18

mens der zwei dem ersten Short-LC-Rahmen entsprechenden Zeitbestimmungs-Rahmen in dem Hochlade-Zyklus umfasst und der zweite Short-LC-Rahmen verbleibende Informationen neben der Seriennummer in der Zeitbestimmungs-Anzeigenachricht umfasst.

10. Speicherungsvorrichtung (1300), die Programmanweisungen (1301) speichert, die von einem Prozessor ausgeführt werden können, wobei die Programmanweisungen zum Implementieren des Verfahrens nach einem der Ansprüche 1 bis 5 konfiguriert sind.

11. Datenübertragungsvorrichtung, die umfasst:

ein Empfangs-Modul (1010), das so konfiguriert ist, dass es mittels eines Endgerätes eine von einer Basisstation ausgegebenen Zeitbestimmungs-Anzeigenachricht empfängt, wobei die Zeitbestimmungs-Anzeigenachricht Zeitbestimmungs-Parameter umfasst, die zum Hochladen von Daten des Endgerätes genutzt werden;
ein Bestimmungs-Modul (S202) , das so konfiguriert ist, dass es Zeit zum Hochladen von Daten des Endgerätes auf Basis der Zeitbestimmungs-Parameter bestimmt; sowie
ein Hochlade-Modul (1030), das so konfiguriert ist, dass es Daten unter Nutzung der Zeit zum Hochladen von Daten hochlädt,
wobei die Zeitbestimmungs-Parameter eine Seriennummer der Zeitbestimmungs-Anzeigenachricht in einem Hochlade-Zyklus, den Hochlade-Zyklus sowie einen Schritt-Wert umfassen, wobei der Schritt-Wert Dauer des Hochladens von Daten jedes Endgerätes ist;
das Bestimmungs-Modul (1020) umfasst:

eine Kalibrier-Einheit, die so konfiguriert ist, dass sie eine aktuelle Zeitposition, die aktuell in dem Hochlade-Zyklus vorliegt, auf Basis der Seriennummer der Zeitbestimmungs-Anzeigenachricht in dem Hochlade-Zyklus kalibriert; sowie
eine Bestimmungs-Einheit, die so konfiguriert ist, dass sie einen Anfangsmoment der Zeit zum Hochladen von Daten auf Basis von Hochlade-Sortierinformationen des Endgerätes sowie der aktuellen Zeitposition und Einsetzen des Schritt-Wertes als Dauer der Zeit zum Hochladen von Daten bestimmt, und
wobei die Bestimmungs-Einheit so konfiguriert ist, dass sie eine theoretische Zeitposition des Endgerätes auf Basis der Hochlade-Sortierinformationen des Endgerätes bestimmt und eine Zeitdifferenz zwischen der theoretischen Zeitposition des Endgerätes und der aktuellen Zeit Position ermittelt, wobei die Zeitdifferenz bis zu dem Anfangsmoment der Zeit zum Hochladen von Daten verbleibende Zeit ist; und
das Hochlade-Modul (1030) umfasst:

eine Zeitbestimmungs-Einheit, die zum Starten von Zeitbestimmung konfiguriert ist; sowie
eine Hochlade-Einheit, die so konfiguriert ist, dass sie Daten innerhalb der Dauer des Schritt-Wertes hochlädt, wenn die Zeitbestimmung die verbleibende Zeit erreicht.

12. Vorrichtung nach Anspruch 11,

wobei die Zeitbestimmungs-Parameter des Weiteren eine Kanalnutzungs-Rate umfassen, die Kanalnutzungs-Rate einen Anteil einer Gesamtdauer der Zeit zum Hochladen von Daten aller Endgeräte in dem Hochlade-Zyklus an der Gesamtdauer des Hochlade-Zyklus repräsentiert; die Hochlade-Sortierinformationen eine theoretische Hochlade-Seriennumer sind; und
die Bestimmungs-Einheit so konfiguriert ist, dass sie eine tatsächliche Hochlade-Seriennummer unter Verwendung der Kanalnutzungs-Rate sowie der theoretischen Hochlade-Seriennumer bestimmt und die theoretische Zeitposition des Endgerätes in dem Hochlade-Zyklus unter Verwendung der tatsächlichen Hochlade-Seriennumer sowie des Schritt-Wertes bestimmt.

13. Vorrichtung nach Anspruch 12, wobei, wenn die Bestimmungs-Einheit zum Bestimmen einer tatsächlichen Hochlade-Seriennumer unter Verwendung der Kanalnutzungs-Rate sowie der theoretischen Hochlade-Seriennumer eingesetzt wird, die folgende Bestimmung vorgenommen werden sollte:

wenn P=1, MO=M;
wenn P≠1 und MO=M; und
wenn P≠1 und,
wobei P die Kanalnutzungs-Rate ist, die theoretische Hochlade-Seriennumer ist und M0 die tatsächliche Hochlade-Seriennumer ist;

die Bestimmungs-Einheit des Weiteren so konfiguriert ist, dass sie die theoretische Zeitposition des Endgerätes in dem Hochlade-Zyklus

durch Subtrahieren von 1 von der tatsächlichen Hochlade-Seriennumer und Multiplizieren mit dem Schritt-Wert ermittelt; und

die Bestimmungs-Einheit des Weiteren so konfiguriert ist, dass sie die folgende Bestimmung vornimmt:

wenn die aktuelle Zeitposition der theoretischen Zeitposition gleich ist oder sie überschreitet,
Addieren einer Differenz zwischen dem Hochlade-Zyklus und der aktuellen Zeitposition zu der theoretischen Zeitposition, um eine erste Zeitdifferenz zu ermitteln; oder
wenn die aktuelle Zeitposition die theoretische Zeitposition unterschreitet,
Bilden einer Differenz zwischen der theoretischen Zeitposition und der aktuellen Zeitposition als eine zweite Zeitdifferenz.

14. Vorrichtung nach Anspruch 11, wobei die Zeitbestimmungs-Anzeigenachricht einer Vielzahl von Zeitbestimmungs-Rahmen des Hochlade-Zyklus entspricht;

die Seriennummer der Zeitbestimmungs-Anzeigenachricht in dem Hochlade-Zyklus eine erste Seriennummer eines Zeitbestimmungs-Rahmens umfasst, der der Zeitbestimmungs-Anzeigenachricht entspricht; und
die Kalibrier-Einheit des Weiteren so konfiguriert ist, dass sie eine zweite Seriennummer des letzten entsprechenden Zeitbestimmungs-Rahmens in der Zeitbestimmungs-Anzeigenachricht unter Verwendung der ersten Seriennummer und der Anzahl von Zeitbestimmungs-Rahmen zwischen dem Zeitbestimmungs-Rahmen mit der ersten Seriennummer und dem letzten entsprechenden Zeitbestimmungs-Rahmen in der Zeitanzeige-Nachricht ermittelt
und ein Produkt der zweiten Seriennummer und Zeit, die einem einzelnen Zeitbestimmungs-Rahmen entspricht, als die aktuelle Zeitposition bildet, die aktuell in dem Hochlade-Zyklus vorliegt.

15. Vorrichtung nach Anspruch 14, wobei die Zeitbestimmungs-Anzeigenachricht von der Basisstation

unter Verwendung eines Steuerungs-Signalisierungsblocks oder eines gemeinsamen Ankündigungs-Kanals ausgegeben wird;
wenn die Zeitbestimmungs-Anzeigenachricht von der Basisstation unter Verwendung des gemeinsamen Ankündigungs-Kanals ausgegeben wird,
die Zeitbestimmungs-Anzeigenachricht zwei Short-LC-Rahmen (short link control frames) umfasst, jeder Short-LC-Rahmen zwei Zeitbestimmungs-Rahmen entspricht, der erste Short-LC-Rahmen die erste Seriennummer umfasst, die erste Seriennummer eine Seriennummer des späteren Zeitbestimmungs-Rahmens der zwei dem ersten Short-LC-Rahmen entsprechenden Zeitbestimmungs-Parameter in dem Hochlade-Zyklus ist und der zweite Short-LC-Rahmen verbleibende Informationen neben der Seriennummer in der Zeitbestimmungs-Anzeigenachricht umfasst; und
die Kalibrier-Einheit des Weiteren so konfiguriert ist, dass sie ermittelt,
dass die Anzahl von Zeitbestimmungs-Rahmen zwischen dem dem ersten Short-LC-Rahmen entsprechenden späteren Zeitbestimmungs-Rahmen und dem dem zweiten Short-LC-Rahmen entsprechenden späteren Zeitbestimmungs-Rahmen 2 beträgt,
und die erste Seriennummer und die Anzahl von Zeitbestimmungs-Rahmen addiert, um die zweite Seriennummer zu ermitteln.

## Revendications

1. Procédé de transmission de données, comprenant :

la réception (S201), par un terminal, d'un message d'indication de temporisation émis par une station de base, dans lequel le message d'indication de temporisation comprend des paramètres de temporisation utilisés pour le téléchargement de données de terminal ;
la détermination (S202) du temps de téléchargement de données du terminal sur la base des paramètres de temporisation ; et
le téléchargement (S203) de données en utilisant le temps de téléchargement de données,
dans lequel les paramètres de temporisation comprennent un numéro de série du message d'indication de temporisation dans un cycle de téléchargement, le cycle de téléchargement et une valeur de pas, dans lequel la valeur de pas est la durée du téléchargement de données de chaque terminal ; et
la détermination du temps de téléchargement de données du terminal sur la base des paramètres de temporisation comprend :

l'étalonnage (S401), sur la base du numéro de série du message d'indication de temporisation dans le cycle de téléchargement, d'une position temporelle actuelle dans le cycle de téléchargement ; et
la détermination (S402), sur la base d'informations de tri de téléchargement du terminal et de la position temporelle actuelle, d'un instant de début du temps de téléchargement de données, et la prise de la valeur de pas comme la durée du temps de téléchargement de données, et
dans lequel la détermination, sur la base d'informations de tri de téléchargement du terminal et de la position temporelle actuelle, d'un instant de début du temps de téléchargement de données comprend :

la détermination d'une position temporelle théorique du terminal sur la base des informations de tri de téléchargement du terminal ; et
l'obtention d'un écart temporel entre la position temporelle théorique du terminal et la position temporelle actuelle, dans lequel l'écart temporel est le temps restant jusqu'à l'instant de début du temps de téléchargement de données ; et
le téléchargement de données en utilisant le temps de téléchargement de données comprend :

la temporisation de début ; et
le téléchargement de données pendant la durée de la valeur de pas lorsque la temporisation atteint le temps restant.

**2.** Procédé selon la revendication 1,

dans lequel les paramètres de temporisation comprennent en outre un taux d'utilisation de canal, dans lequel le taux d'utilisation de canal représente une proportion de la durée totale du temps de téléchargement de données de tous les terminaux dans le cycle de téléchargement par rapport à la durée totale du cycle de téléchargement ;
les informations de tri de téléchargement représentent un numéro de série de téléchargement théorique ; et
la détermination d'une position temporelle théorique du terminal sur la base des informations de tri de téléchargement du terminal comprend :

la détermination d'un numéro de série de téléchargement réel en utilisant le taux d'utilisation de canal et le numéro de série de téléchargement théorique ; et
l'obtention de la position temporelle théorique du terminal dans le cycle de téléchargement en utilisant le numéro de série de téléchargement réel et la valeur de pas.

**3.** Procédé selon la revendication 2, dans lequel la détermination d'un numéro de série de téléchargement réel en utilisant le taux d'utilisation de canal et le numéro de série de téléchargement théorique comprend :

lorsque $P = 1$, $M0 = M$ ;
lorsque $P \neq 1$ et $M0 = M$ ; et
lorsque $P \neq 1$ et,
dans lequel $P$ est le taux d'utilisation de canal, $M$ est le numéro de série de téléchargement théorique ; et $M0$ est le numéro de série de téléchargement réel ;
l'obtention de la position temporelle théorique du terminal dans le cycle de téléchargement en utilisant le numéro de série de téléchargement réel et la valeur de pas comprend :

l'obtention de la position temporelle théorique du terminal dans le cycle de téléchargement en soustrayant 1 du numéro de série de téléchargement réel et en multipliant par la valeur de pas ; et
l'obtention d'un écart temporel entre la position temporelle théorique du terminal et la position temporelle actuelle comprend :

si la position temporelle actuelle est supérieure ou égale à la position temporelle théorique, l'addition d'un écart entre le cycle de téléchargement et la position temporelle actuelle à la position temporelle théorique pour obtenir un premier écart temporel ; ou
si la position temporelle actuelle est inférieure à la position temporelle théorique, la prise d'un écart entre la position temporelle théorique et la position temporelle actuelle comme deuxième écart temporel.

4. Procédé selon la revendication 1, dans lequel le message d'indication de temporisation correspond à une pluralité de trames de temporisation du cycle de téléchargement ; le numéro de série du message d'indication de temporisation dans le cycle de téléchargement comprend un premier numéro de série d'une trame de temporisation correspondant au message d'indication de temporisation ; et

l'étalonnage, sur la base du numéro de série du message d'indication de temporisation dans le cycle de téléchargement, d'une position temporelle actuelle actuellement dans le cycle de téléchargement comprend :

l'obtention d'un deuxième numéro de série de la dernière trame de temporisation correspondante dans le message d'indication de temporisation en utilisant le premier numéro de série et le nombre de trames de temporisation entre la trame de temporisation ayant le premier numéro de série et la dernière trame de temporisation correspondante dans le message d'indication de temporisation ; et

la prise d'un produit du deuxième numéro de série et du temps correspondant à une trame de temporisation unitaire comme position temporelle actuelle actuellement dans le cycle de téléchargement.

5. Procédé selon la revendication 4, dans lequel le message d'indication de temporisation est émis par la station de base en utilisant un bloc de signalisation de commande ou un canal d'annonce commun ;

lorsque le message d'indication de temporisation est émis par la station de base en utilisant le canal d'annonce commun, le message d'indication de temporisation comprend deux trames de commande de liaison courte, chaque trame de commande de liaison courte correspond à deux trames de temporisation, la première trame de commande de liaison courte comprend le premier numéro de série, le premier numéro de série est un numéro de série de la dernière trame de temporisation des deux trames de temporisation correspondant à la première trame de commande de liaison courte dans le cycle de téléchargement, et la deuxième trame de commande de liaison courte comprend les informations restantes autres que le numéro de série dans le message d'indication de temporisation ; et

l'obtention d'un deuxième numéro de série de la dernière trame de temporisation correspondante dans le message d'indication de temporisation en utilisant le premier numéro de série et le nombre de trames de temporisation entre la trame de temporisation ayant le premier numéro de série et la dernière trame de temporisation correspondante dans le message d'indication de temporisation comprend :

l'obtention du fait que le nombre de trames de temporisation entre la dernière trame de temporisation correspondant à la première trame de commande de liaison courte et la dernière trame de temporisation correspondant à la deuxième trame de commande de liaison courte est égal à 2 ; et

l'addition du premier numéro de série et du nombre de trames de temporisation pour obtenir le deuxième numéro de série.

6. Terminal (11), comprenant un processeur (1202), un circuit de communication (1203) et une mémoire (1201) connectée au processeur, dans lequel le processeur est configuré pour exécuter des instructions de programme stockées par la mémoire, afin de mettre en œuvre, en combinaison avec le circuit de communication, le procédé selon l'une des revendications 1 à 5.

7. Système de transmission de données (10), comprenant une station de base (12) et une pluralité de terminaux (11), dans lequel au moins un canal est établi entre la station de base et les terminaux pour effectuer des communications ; et

le terminal est le terminal selon la revendication 6.

8. Système de transmission de données selon la revendication 7, dans lequel la station de base comprend un processeur (1202), un circuit de communication (1203) et une mémoire (1201) connectée au processeur, dans lequel le processeur est configuré pour exécuter des instructions de programme stockées par la mémoire, afin de mettre en œuvre, en combinaison avec le circuit de communication, le procédé de :

génération (S901) d'un message d'indication de temporisation, dans lequel le message d'indication de temporisation comprend des paramètres de temporisation utilisés pour le téléchargement de données de terminal ; et
l'émission (S902) du message d'indication de temporisation à un terminal, de sorte que le terminal détermine un temps de téléchargement de données du terminal sur la base des paramètres de temporisation et télécharge des données en utilisant le temps de téléchargement de données.

9. Système de transmission de données selon la revendication 8, dans lequel les paramètres de temporisation comprennent un numéro de série du message d'indication de temporisation dans un cycle de téléchargement, le cycle de téléchargement et une valeur de pas, dans lequel la valeur de pas est une durée de téléchargement de données de chaque terminal ;

la génération, par une station de base, d'un message d'indication de temporisation comprend :

la détermination, par la station de base, selon une situation d'un terminal actuellement connecté à la station de base, du cycle de téléchargement et/ou de la valeur de pas représentant la durée de téléchargement de données de chaque terminal, et l'encapsulation de la valeur de pas, du numéro de série du message d'indication de temporisation dans le cycle de téléchargement, et du cycle de téléchargement pour former le message d'indication de temporisation ; et

l'émission du message d'indication de temporisation à un terminal comprend :

l'émission du message d'indication de temporisation en utilisant un bloc de signalisation de commande ou un canal d'annonce commun, dans lequel, lorsque le message d'indication de temporisation est émis en utilisant le canal d'annonce commun, le message d'indication de temporisation comprend deux trames de commande de liaison courte, chaque trame de commande de liaison courte correspond à deux trames de temporisation, la première trame de commande de liaison courte comprend un numéro de série de la dernière trame de temporisation des deux trames de temporisation correspondant à la première trame de commande de liaison courte dans le cycle de téléchargement, et la deuxième trame de commande de liaison courte comprend les informations restantes autres que le numéro de série du message d'indication de temporisation.

10. Appareil de stockage (1300), stockant des instructions de programme (1301) exécutables par un processeur, dans lequel les instructions de programme sont configurées pour mettre en œuvre le procédé selon l'une quelconque des revendications 1 à 5.

11. Appareil de transmission de données, comprenant :

un module de réception (1010), configuré pour recevoir, par un terminal, un message d'indication de temporisation émis par une station de base, dans lequel le message d'indication de temporisation comprend des paramètres de temporisation utilisés pour le téléchargement de données de terminal ;

un module de détermination (1020), configuré pour déterminer un temps de téléchargement de données du terminal sur la base des paramètres de temporisation ; et

un module de téléchargement (1030), configuré pour télécharger des données en utilisant le temps de téléchargement de données,

dans lequel les paramètres de temporisation comprennent un numéro de série du message d'indication de temporisation dans un cycle de téléchargement, le cycle de téléchargement et une valeur de pas, dans lequel la valeur de pas est une durée de téléchargement de données de chaque terminal ;

le module de détermination (1020) comprend :

une unité d'étalonnage, configurée pour étalonner, sur la base du numéro de série du message d'indication de temporisation dans le cycle de téléchargement, une position temporelle actuelle actuellement dans le cycle de téléchargement ; et

une unité de détermination, configurée pour déterminer, sur la base d'informations de tri de téléchargement du terminal et de la position temporelle actuelle, un instant de début du temps de téléchargement de données, et prendre la valeur de pas comme durée du temps de téléchargement de données, et

dans lequel l'unité de détermination est configurée pour déterminer une position temporelle théorique du terminal sur la base des informations de tri de téléchargement du terminal, et obtenir un écart temporel entre la position temporelle théorique du terminal et la position temporelle actuelle, dans lequel l'écart temporel est le temps restant jusqu'à l'instant de début du temps de téléchargement de données ; et

le module de téléchargement (1030) comprend :

une unité de temporisation, configurée pour démarrer la temporisation ; et

une unité de téléchargement, configurée pour télécharger des données pendant la durée de la valeur de pas lorsque la temporisation atteint le temps restant.

12. Appareil selon la revendication 11,

dans lequel les paramètres de temporisation comprennent en outre un taux d'utilisation de canal, dans lequel le taux d'utilisation de canal représente une proportion de la durée totale du temps de téléchargement de données de tous les terminaux dans le cycle de téléchargement par rapport à la durée totale du cycle de téléchargement ; les informations de tri de téléchargement représentent un numéro de série de téléchargement théorique ; et l'unité de détermination est configurée pour déterminer un numéro de série de téléchargement réel en utilisant le taux d'utilisation de canal et le numéro de série de téléchargement théorique, et obtenir la position temporelle théorique du terminal dans le cycle de téléchargement en utilisant le numéro de série de téléchargement réel et la valeur de pas.

13. Appareil selon la revendication 12, dans lequel, lorsque l'unité de détermination est utilisée pour déterminer un numéro de série de téléchargement réel en utilisant le taux d'utilisation de canal et le numéro de série de téléchargement théorique, la détermination suivante doit être effectuée :

lorsque P = 1, M0 = M ;
lorsque P ≠ 1 et, M0 = M ; et
lorsque P ≠ 1 et,
dans lequel P est le taux d'utilisation de canal, M est le numéro de série de téléchargement théorique ; et M0 est le numéro de série de téléchargement réel ;
l'unité de détermination est en outre configurée pour obtenir la position temporelle théorique du terminal dans le cycle de téléchargement en soustrayant 1 du numéro de série de téléchargement réel et en multipliant par la valeur de pas ; et
l'unité de détermination est en outre configurée pour effectuer la détermination suivante :

si la position temporelle actuelle est supérieure ou égale à la position temporelle théorique, l'addition de l'écart entre le cycle de téléchargement et la position temporelle actuelle à la position temporelle théorique pour obtenir un premier écart temporel ; ou
si la position temporelle actuelle est inférieure à la position temporelle théorique, la prise de l'écart entre la position temporelle théorique et la position temporelle actuelle comme deuxième écart temporel.

14. Appareil selon la revendication 11, dans lequel le message d'indication de temporisation correspond à une pluralité de trames de temporisation du cycle de téléchargement ; le numéro de série du message d'indication de temporisation dans le cycle de téléchargement comprend un premier numéro de série d'une trame de temporisation correspondant au message d'indication de temporisation ; et
l'unité d'étalonnage est en outre configurée pour obtenir un deuxième numéro de série de la dernière trame de temporisation correspondante dans le message d'indication de temporisation en utilisant le premier numéro de série et le nombre de trames de temporisation entre la trame de temporisation ayant le premier numéro de série et la dernière trame de temporisation correspondante dans le message d'indication de temporisation, et prendre un produit du deuxième numéro de série et du temps correspondant à une trame de temporisation unitaire comme position temporelle actuelle actuellement dans le cycle de téléchargement.

15. Appareil selon la revendication 14, dans lequel le message d'indication de temporisation est émis par la station de base en utilisant un bloc de signalisation de commande ou un canal d'annonce commun ; lorsque le message d'indication de temporisation est émis par la station de base en utilisant le canal d'annonce commun, le message d'indication de temporisation comprend deux trames de commande de liaison courte, chaque trame de commande de liaison courte correspond à deux trames de temporisation, la première trame de commande de liaison courte comprend le premier numéro de série, le premier numéro de série est un numéro de série de la dernière trame de temporisation parmi les deux trames de temporisation correspondant à la première trame de commande de liaison courte dans le cycle de téléchargement, et la deuxième trame de commande de liaison courte comprend les informations restantes autres que le numéro de série dans le message d'indication de temporisation ; et
l'unité d'étalonnage est en outre configurée pour obtenir que le nombre de trames de temporisation entre la dernière trame de temporisation correspondant à la première trame de commande de liaison courte et la dernière trame de temporisation correspondant à la deuxième trame de commande de liaison courte est égal à 2, et additionner le premier numéro de série et le nombre de trames de temporisation pour obtenir le deuxième numéro de série.

FIG. 1

Receiving, by a terminal, a timing indication message issued by a base station, where the timing indication message includes timing parameters used for terminal data uploading    S201

Determining data upload time of the terminal on the basis of the timing parameters    S202

Uploading data by using the data upload time    S203

FIG. 2

FIG. 3

Calibrating, on the basis of a serial number
of a timing indication message in an upload
cycle, a current time position currently
in the upload cycle

S401

Determining, on the basis of upload sorting
information of a terminal and the current time
position, a starting moment of data upload
time, and take a step value as duration of the
data upload time

S402

FIG. 4

120ms — 120ms

| 2 | 1 | 2 | 1 | 2 | 1 | 2 | 1 | 2 | 1 |

Short LC (28bit)    Short LC (28bit)

FIG. 5

| SLCO(4bit) | |
|---|---|
| Reserved(8bit) | |
| N(16bit) | |

| | SLCO(4bit) |
|---|---|
| Reserved(3) | STEP(6bit) |
| R(1) | P(3bit) | T |
| T(12bit) | |

FIG. 6

Receiving a new timing indication message
issued by a base station in a current working
channel under an idle state

S701

Determining
whether timing
parameters in the new timing
indication message have
changed

No

S702

Yes

Determining new data upload time on the basis
of the timing parameters in the new timing
indication message

Maintaining current
data upload time

S703                                          S704

FIG. 7

26

Receiving a first timing indication message issued
by a base station in a current working channel
under an idle state　　　S801

Determining
whether timing
parameters in the first
timing indication message
have changed　　　No

S802

Maintaining current
data upload time　　　S804

Yes

Switching to a data channel, receiving a second
timing indication message in the data channel, and
determining new data upload time on the basis of
timing parameters in the second timing indication
message

S803

Switching from the data channel
to the working channel

S805

## FIG. 8

Generating, by a base station, a timing indication
message, where the timing indication message
includes timing parameters used for terminal
data uploading　　　S901

Issuing the timing indication message to a terminal,
so that the terminal determines data upload time of
the terminal on the basis of the timing parameters
and uploads data by using the data upload time　　　S902

## FIG. 9

| Receiving module | Determining module | Uploading module |
|---|---|---|
| S1010 | S1020 | S1030 |

## FIG. 10

| Generating module | Sending module |
|---|---|
| S1110 | S1120 |

## FIG. 11

Processor

1202

1200

Memory

Communication circuit

1201

1203

FIG. 12

Program instruction

1300

1301

FIG. 13

Data CH  F3

Voice CH2 F2

Voice CH1 F1

R1

Switch

FIG. 14

FIG. 15

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019149364 A1

- US 2019037590 A1